# DEMANDE DE BREVET EUROPEEN

(11) **EP 1 085 663 A1**
(43) Date de publication de la demande: **21.03.2001**
(21) Numéro de dépôt: 00402579.7
(22) Date de dépôt: 18.09.2000
(51) Int. Cl.: H04B 1/12

(54) **Dispositif de suppression d'interférences entre deux antennes et son procédé associé**

(30) Priorité: 17.09.1999 FR 9911681
(71) Demandeur: SAGEM SA, 75783 Paris Cédex 16 (FR)
(72) Inventeur: Samouillan, Gérard, 82000 Montauban (FR)
(74) Mandataire: Schmit, Christian Norbert Marie

(57) **Abrégé**

Pour améliorer un découplage entre deux antennes (2, 3), l'une fonctionnant dans une première bande de fréquences GSM d'émission et ou de réception et l'autre fonctionnant dans une deuxième bande de fréquences GSM-R d'émission et ou de réception adjacentes respectivement, on relie à l'aide de coupleurs (39, 40) la première antenne à la deuxième antenne par une liaison (34) filaire permettant de prélever un signal émis par la première antenne et de le réinjecter en opposition de phase dans la deuxième antenne, ce signal prélevé étant transmis par voie aérienne et reçu par la deuxième antenne sous forme d'un signal parasite. Le signal parasite et le signal injecté se combinent pour s'annuler et améliorer ainsi un rapport signal à bruit d'un signal reçu par la deuxième antenne.

## Description

La présente invention a pour objet un dispositif de suppression d'interférences entre deux antennes. Elle a aussi pour objet un procédé associé. Elle s'applique au domaine des transmissions en espaces libres et plus précisément des transmissions dont une antenne est omnidirectionnelle. Elle s'applique plus particulièrement aux systèmes de téléphonie mobile dont un premier émetteur récepteur avec son antenne est placé à proximité d'un deuxième émetteur récepteur avec son antenne. Le but de l'invention est de permettre au deuxième émetteur récepteur de recevoir des signaux en supprimant des interférences dues à une émission à partir du premier émetteur récepteur.

Actuellement, chaque système d'émission et ou de réception par voie de propagation libre est associé à une porteuse ou à un ensemble de porteuses. Tous ces systèmes de transmission sont appelés à se côtoyer. Dans ce cas, une antenne d'un premier système va interférer avec une antenne d'un deuxième système. Cette interférence est d'autant plus grande que les bandes de fréquence dans lesquelles le premier système et le deuxième système fonctionnent sont proches. En outre, plus un écart entre les deux antennes diminue et plus l'interférence est importante. Cette interférence se produit plus particulièrement lorsque l'antenne du premier système est utilisée en émission et lorsque l'antenne du deuxième système est utilisée en réception. On dit alors que le récepteur de la deuxième antenne est ébloui par l'émetteur de la première antenne.

On trouve notamment ce problème d'éblouissement dans le cadre d'un système GSM d'émission réception qui côtoie un système GSM-R d'émission réception (GSM-Ralway pour GSM-ferrovière en français). Le système GSM-R est un système GSM dont une partie de la bande de fréquence en émission et de la bande de fréquence en réception est inférieure à la bande de fréquence en émission et à la bande de fréquence en réception du système GSM respectivement. Les deux bandes d'émission sont adjacentes ainsi que les deux bandes de fréquence de réception. Actuellement, le système GSM-R est exploité par des opérateurs ferroviaires. Ainsi, un train d'un opérateur est équipé d'un émetteur-récepteur relié à une antenne fixée sur le toit d'un wagon de ce train par exemple, cet émetteur-récepteur étant ainsi en liaison avec une station de base. En outre, ce train comporte aussi un système GSM de téléphonie permettant à des passagers du train de pouvoir émettre et/ou recevoir des appels téléphoniques. Ces deux systèmes sont donc appelés à cohabiter dans ce train.

Une telle réalisation présente les problèmes cités plus haut. La bande de fréquence de réception du système GSM-R débute à 921 MHz. Or la bande de fréquence d'émission du système GSM se termine à 915 MHz. Ce qui signifie que la bande de fréquence d'émission du système GSM est séparée de la bande de fréquence de réception du système GSM-R par une bande de séparation de seulement 6 MHz. En conséquence, une fréquence d'émission de l'émetteur GSM est susceptible de se trouver à quelques mégahertz seulement d'une fréquence de réception du récepteur GSM-R. Des perturbations sont donc prévisibles entre cet émetteur et ce récepteur.

Ce problème pourrait a priori être réglé par l'utilisation d'un filtre duplexeur. Cependant, celui-ci est très onéreux car il devra présenter à la fois une grande bande passante et une bande de transition étroite. Pour cette raison, un découplage maximum entre les antennes est souhaitable, car il permet de réduire les contraintes supportées par ce filtre duplexeur. Ainsi, deux antennes dont au moins une est omnidirectionnelle et situées sur le même toit d'un wagon sont d'autant plus découplées que leur distance sera grande. Par exemple, une distance de deux mètres entre les deux antennes permet d'obtenir le découplage de 30 décibels environ.

La présente invention permet d'améliorer le découplage entre ces deux antennes. En effet, lorsque la première antenne émet un signal celui-ci est capté par la deuxième antenne sous la forme d'un signal parasite d'autant plus gênant pour le récepteur qu'il est proche de la fréquence de réception. Une amplitude du signal parasite dépend de a distance entre la première antenne et la deuxième antenne. Dans l'invention on réinjecte dans le signal reçu un signal des même caractéristiques que le signal parasite mais en opposition de phase avec celui-ci. On procède ainsi à une annulation d'une interférence. Avec l'invention, on améliore un rapport signal à bruit de 12 à 20 dB environ.

En outre, plus on éloigne les antennes et plus le signal parasite est faible. On ne peut toutefois éloigner indéfiniment les antennes car la place sur le toit du wagon est limitée. Par contre, l'invention est d'autant plus efficace que les antennes sont proches, car, dans ce cas, le signal perturbateur dépend peu des variations de l'environnement.

L'invention concerne donc un dispositif de suppression d'interférences causées par une première antenne omnidirectionnelle reliée par un premier câble à une première borne de connexion à un premier émetteur récepteur d'un signal à une première fréquence sur une deuxième antenne reliée par un deuxième câble à une deuxième borne de connexion à un deuxième émetteur récepteur d'un signal à une deuxième fréquence, la première antenne étant utilisée en émission et la deuxième antenne étant utilisée en réception, caractérisé en ce qu'il comporte une liaison filaire avec d'une part une première extrémité reliée entre la première antenne et le premier émetteur récepteur et d'autre part une deuxième extrémité reliée entre la deuxième antenne et le deuxième émetteur récepteur, la première extrémité prélevant une partie d'un signal émis par la première antenne et reçue par la deuxième antenne sous la forme d'un signal parasite, la deuxième extrémité de la liaison injectant dans le deuxième récepteur un signal compensateur en opposition de phase par rapport au signal parasite reçu et de même amplitude, et en ce que la liaison comporte des moyens pour produire un signal en opposition de phase par rapport au signal parasite reçu et de même amplitude et en ce que la liaison est en polytétrafluoroéthylène.

Elle concerne aussi un procédé de suppression d'interférences causées par une première antenne reliée à un premier émetteur récepteur sur une deuxième antenne reliée à un deuxième émetteur récepteur, dans lequel :
- on émet un premier signal à partir de la première antenne,
- on reçoit un deuxième signal avec la deuxième antenne, le deuxième signal comprenant un signal utile et un signal parasite, le signal parasite étant le premier signal,
caractérisé en ce que :
- on prélève à l'aide d'un coupleur une partie d'un signal destiné à être émis par la première antenne,
- on transmet ce signal prélevé par l'intermédiaire d'une liaison filaire en polytétrafluoroéthylène, ce signal prélevé étant par la suite injecté à une entrée du récepteur de la deuxième antenne,
et en ce que :
- on atténue, avec un atténuateur dans la liaison filaire, ce signal de façon à obtenir un signal compensateur de même amplitude que le signal parasite,
- on règle une longueur de la liaison filaire, avec un déphaseur, de façon à obtenir un signal compensateur en opposition de phase avec le signal parasite,
- on injecte ce signal compensateur dans le récepteur.

La présente invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une représentation d'une utilisation du dispositif de l'invention ;
- Figure 2 : une représentation, sous une forme d'un algorithme, d'un fonctionnement du procédé de l'invention.

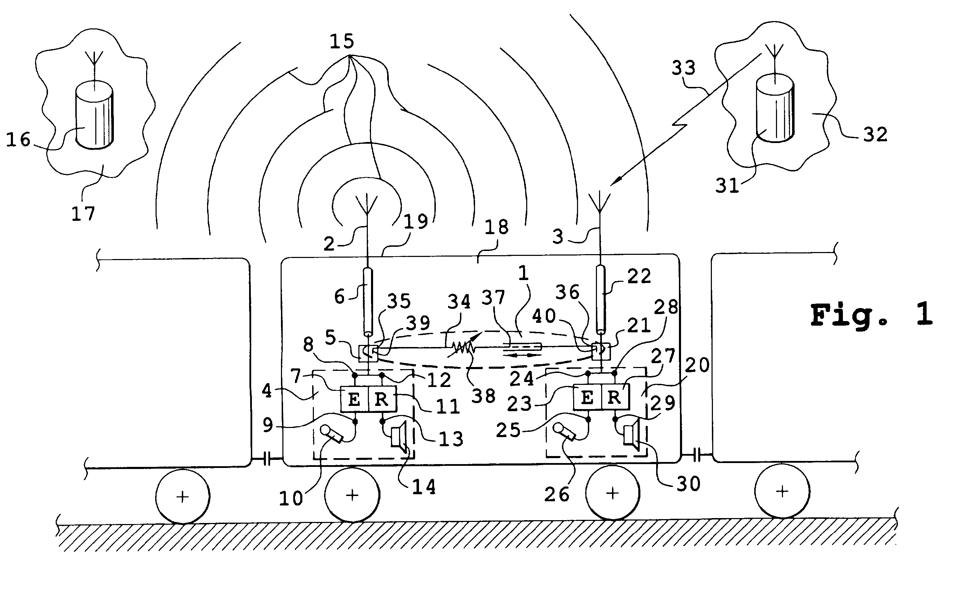

La figure 1 montre, dans un schéma simplifié, un dispositif 1 de suppression d'interférences selon l'invention. Ce dispositif 1 permet donc de supprimer une interférence d'une première antenne 2 sur une deuxième antenne 3. L'antenne 2 est de préférence une antenne omnidirectionnelle. L'antenne 3 peut aussi être omnidirectionnelle. L'antenne 2 est reliée à un premier émetteur-récepteur 4 par une première borne 5 de connexion. Une liaison entre l'antenne 2 et la borne 5 est réalisée, par exemple, à l'aide d'un câble 6 coaxial. L'émetteur-récepteur 4 comporte un émetteur 7 avec une sortie 8 reliée à la borne 5 et une entrée 9 reliée à un transducteur 10 tel qu'un microphone 10. L'émetteur-récepteur 4 comporte en outre un récepteur 11 avec une entrée 12 reliée à la borne 5 et une sortie 13 reliée à un écouteur 14. Ainsi, l'émetteur-récepteur 4 permet, en émettant des signaux 15 avec l'antenne 2, de communiquer, dans le cadre d'un système de téléphonie, avec une station 16 de base d'un réseau 17 de téléphonie mobile. Dans un exemple préféré, l'émetteur-récepteur 4 fonctionne dans une bande de fréquence associé au système GSM, l'émetteur 7 et le récepteur 11 comportant les moyens nécessaires pour permettre une communication selon la norme GSM. Cet ensemble de communication formé par l'antenne 2, le câble 6, la borne 5 et l'émetteur-récepteur 4 sont placés dans un wagon 18 d'un train, l'antenne 2 étant disposée, de manière préférée, sur le toit 19 du wagon 18.

L'antenne 3 est reliée à un deuxième émetteur-récepteur 20 par l'intermédiaire d'une borne 21 de connexion. L'antenne 3 est reliée à la borne 21 par l'intermédiaire, par exemple, d'un câble 22 coaxial. L'émetteur-récepteur 20 comporte un émetteur 23 avec une sortie 24 reliée à la borne 21 et une entrée 25 reliée à un microphone 26. L'émetteur-récepteur 20 comporte en outre un récepteur 27 avec une entrée 28 reliée à la borne 21 et une sortie 29 reliée à un haut-parleur 30. Ce deuxième ensemble de communication constitué par l'antenne 3, le câble 22, la borne 21 et l'émetteur-récepteur 20 est aussi placé dans le wagon 18, l'antenne 3 étant placé sur le toit 19. L'émetteur récepteur 20 permet de communiquer avec une deuxième station 31 de base d'un réseau 32. Dans un exemple préféré, l'émetteur-récepteur 20 fonctionne dans une bande de fréquence associée au système GSM-R, l'émetteur 23 et le récepteur 27 comportant les moyens nécessaires pour assurer cette communication. Ainsi, dans un exemple, l'antenne 3 est utilisé en réception par l'émetteur-récepteur 20 et reçoit un signal 33 de la station 31.

Cependant, l'antenne 3 reçoit, en plus du signal 33, une contribution du signal 15 sous la forme d'un signal parasite. Le dispositif 1 de l'invention comporte une liaison 34 filaire permettant de prélever, quelque part entre l'émetteur 7 et l'antenne 2, une partie du signal destiné à être émis sous la forme du signal 15. Le plus efficace serait de prélever le signal juste avant l'antenne 2. Cependant, dans ce cas, le dispositif 1 se situe sous le toit 19 et est par conséquent peu accessible pour des réglages. Dans un exemple de réalisation possible de l'invention, la liaison 34 comporte une première extrémité 35 reliée à la borne 5 pour prélever cette partie de signal. De plus, la liaison 34 comporte une deuxième extrémité 36 reliée à la borne 21, pour injecter un signal compensateur, produit à partir du signal prélevé, à ajouter au signal reçu par l'antenne 3 comportant le signal 33 et le signal 15. Le dispositif 1 permet de simuler le trajet suivi par le signal 15 jusqu'à la borne 21 par l'intermédiaire de l'antenne 3. En outre, le dispositif 1 produit un signal en opposition de phase par rapport au signal parasite reçu et de même amplitude. En conséquence, le dispositif 1, ou plus précisément la liaison 34, comporte des moyens 37 et ou 38 pour produire un signal en opposition de phase par rapport au signal parasite reçu et de même amplitude respectivement.

Dans un exemple préféré de l'invention, le moyen 37 est un déphaseur et le moyen 38 est un atténuateur. Dans une réalisation préférée, le moyen 37 est une ligne coulissante permettant de faire varier la longueur de la liaison 34 et donc un déphasage, par rapport au signal 15 reçu par l'antenne 3, du signal la traversant. Le moyen 38 est un atténuateur radiofréquences, ou encore atténuateur RF, voire tout autre dispositif permettant d'atténuer la puissance du signal prélevé à l'extrémité 35 tout en respectant l'adaptation d'impédance à la ligne. Ainsi, le signal compensateur produit à l'extrémité 36 va se combiner avec le signal 15 reçu par l'antenne 3 pour produire un signal résultant de très faible puissance par rapport au signal 15 reçu sur l'antenne 3. Une atténuation ainsi obtenue est d'autant meilleur que les réglages effectués par le moyen 37 et le moyen 38 sont précis. Par exemple, en espaçant l'antenne 2 et l'antenne 3 d'une distance de l'ordre de deux mètres, on obtient une atténuation d'environ 30 dB, le dispositif 1 permettant d'améliorer cet atténuation de 12 à plus de 20 dB.

Dans une variante, la ligne coulissante 37 est de longueur maximale égale à une longueur d'onde. On détermine une longueur d'onde à partir d'une fréquence, la plus petite utilisable, associée à une bande de fréquence GSM, plus particulièrement la bande d'émission, dans la quelle l'antenne 2 fonctionne.

Dans une réalisation préférée de l'invention la liaison 34 comporte un premier coupleur 39 directif à l'extrémité 35 et un deuxième coupleur 40 directif relié à l'extrémité 36.

Dans une variante préférée de l'invention, la liaison 34 est d'une longueur électrique égale à la longueur du câble 6 additionnée à la longueur du câble 22 ainsi que la distance entre l'antenne 2 et l'antenne 3 et ce à une valeur de la longueur d'onde près. En effet, dans le cas où la longueur 34 serait très inférieur à la somme de ces dernières longueurs, cela conduit à réaliser une transmission à travers la liaison 34 en bande étroite. En conséquence, dès qu'une fréquence du signal change alors la phase associée varie aussi et plus que dans le cas d'une transmission utilisant des signaux larges bandes. C'est pourquoi, en prenant une longueur de la liaison 34 environ égale à la somme de ces trois longueurs on se retrouve dans le cadre d'une compensation large bande et donc d'une phase constante ou presque. En outre, une variation dans la longueur des câbles 6 ou 22 et/ou de la liaison 34 conduisent à ajouter un déphasage supplémentaire entre le signal parasite et le signal compensateur. Ce déphasage supplémentaire a pour effet de supprimer la mise en opposition de phase et donc de dégrader la compensation.

Ainsi, dans une variante préférée de l'invention, le câble 6, le câble 22 et la liaison 34 sont réalisés à partir d'un matériau en polytétrafluoroéthylène. En effet, un tel matériau est résistant à la chaleur et au vieillissement. On pourrait très bien utiliser tout autre matériau aux caractéristiques peu influencées par la température et le vieillissement.

Toutefois, seule une partie de la liaison formée par les liaisons 6, 22 et 34 est soumise à des contraintes en température. Dans ce cas, il n'est pas nécessaire que les liaisons non concernées soit en polytétrafluoroéthylène. Le polytétrafluoroéthylène est un diélectrique. Ainsi, un câble, coaxiale par exemple, qui est en polytétrafluoroéthylène signifie en fait que ce câble comporte un diélectrique et que c'est ce diélectrique qui est en polytétrafluoroéthylène.

En outre, il existe plusieurs réalisation pour le diélectrique. En effet, il peut être plein, poreux ou encore aéré. Il peut s'agir de rondelles de polytétrafluoroéthylène réparties sur la longueur du câble considéré. La réalisation du diélectrique influe sur les caractéristiques du câble. En conséquence, la façon de réaliser ce diélectrique dépendra notamment d'une qualité de service recherchée.

Dans une variante possible de l'invention, on place un déphaseur (non représenté) sur le trajet suivi par le signal parasite. Ce trajet comporte notamment le câble 6 et le câble 22. En outre, on peut supprimer dans cette variante le déphaseur 37. Ainsi, le signal compensateur est en phase avec le signal prélevé à l'extrémité 35. On déphase ainsi le signal parasite reçu par rapport au signal émis par l'émetteur 7.

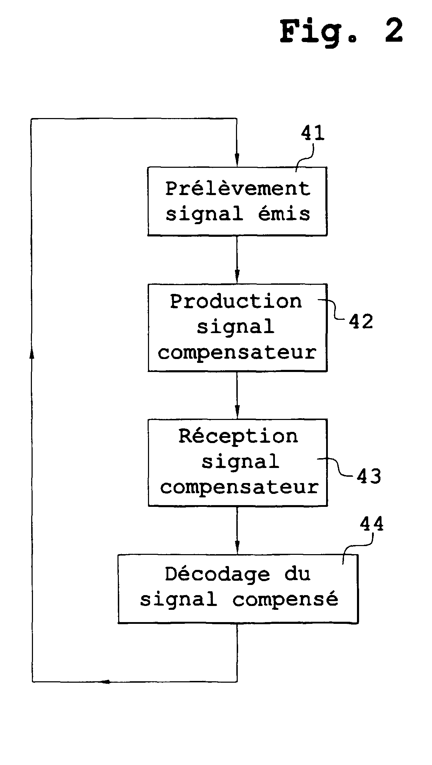

La figure 2 montre une représentation sous forme d'un algorithme, d'un fonctionnement du procédé de l'invention. Ainsi dans une étape 41, on connecte le dispositif 1, non encore réglé ou alors seulement grossièrement, entre la borne 5 et la borne 21 par exemple à l'aide de l'extrémité 35 et de l'extrémité 36. On pourrait très bien le connecter directement entre l'antenne 2 et l'antenne 3. Ainsi, on prélève à l'aide du coupleur 39 (figure 1) une partie du signal produit par l'émetteur 7. Ce signal prélevé est ensuite traité dans une étape 42 dans laquelle on observe à l'entrée du récepteur 27, à l'aide de la borne 21 par exemple, le signal parasite reçu. On agit par retouches successives sur l'atténuation et sur la phase de façon à rendre minimum ce signal parasite. On produit ainsi à l'extrémité 36 un signal compensateur. On atténue le signal prélevé et on règle une longueur de la liaison 34 à travers laquelle le signal prélevé se propage. Dans une étape 43, on reçoit dans le récepteur 27 un signal compensé dont une contribution du signal parasite est réduite dans un rapport d'environ 30 dB. On produit ainsi un signal compensé. Ce signal compensé est ensuite envoyé en entrée 28 du récepteur 27 pour y être décodé dans une étape 44.

## Revendications

1. Dispositif (1) de suppression d'interférences causées par une première antenne (2) omnidirectionnelle reliée par un premier câble (6) à une première borne (5) de connexion à un premier émetteur (7) récepteur (11) d'un signal (15) à une première fréquence sur une deuxième antenne (3) reliée par un deuxième câble (22) à une deuxième borne (21) de connexion à un deuxième émetteur (23) récepteur (27) d'un signal à une deuxième fréquence, la première antenne étant utilisée en émission et la deuxième antenne étant utilisée en réception, caractérisé en ce qu'il comporte une liaison (34) filaire avec une première extrémité (35) reliée à la première borne de connexion et une deuxième extrémité (36) reliée à la deuxième borne de connexion, la première extrémité prélevant une partie d'un signal émis par la première antenne et reçue par la deuxième antenne sous la forme d'un signal parasite, la deuxième extrémité de la liaison injectant dans le deuxième récepteur un signal compensateur en opposition de phase par rapport au signal parasite reçu et de même amplitude, et en ce que la liaison comporte des moyens (37, 38) pour produire un signal en opposition de phase par rapport au signal parasite reçu et de même amplitude et en ce que la liaison est en polytétrafluoroéthylène.

2. Dispositif selon la revendication 1 caractérisé en ce que le premier émetteur récepteur fonctionne dans une bande de fréquences associée au système GSM de téléphonie et le deuxième émetteur récepteur fonctionne dans une bande de fréquences associée au système GSM-R de téléphonie.

3. Dispositif selon l'une des revendications 1 ou 2 caractérisé en ce que les moyens sont un atténuateur (38) et ou un déphaseur (37).

4. Dispositif selon la revendication 3 caractérisé en ce que l'atténuateur est un dispositif à résistance variable et le déphaseur est une ligne coulissante permettant de faire varier la longueur de la liaison, l'atténuateur et le déphaseur étant en série avec la liaison.

5. Dispositif selon la revendication 4 caractérisé en ce que la ligne coulissante est de longueur maximale égale à une longueur d'onde, cette longueur d'onde étant déterminée à partir d'une fréquence, la plus petite utilisable, associée à une bande de fréquences dans laquelle la première antenne fonctionne.

6. Dispositif selon l'une des revendications 1 à 5 caractérisé en ce que la liaison comporte un premier coupleur (39) directif permettant de prélever le signal en entrée et un deuxième coupleur (40) directif permettant d'ajouter un signal au signal reçu par la deuxième antenne.

7. Dispositif selon l'une des revendications 1 à 6 caractérisé en ce que la liaison est d'une longueur égale à une longueur d'un premier câble de liaison de la première antenne à la première borne additionnée à une longueur d'un deuxième câble de liaison de la deuxième antenne à la deuxième borne à une valeur de la longueur d'onde près.

8. Dispositif selon l'une des revendications 1 à 7 caractérisé en ce qu'il comporte un déphaseur sur le trajet suivi par le signal parasite, ce trajet comportant notamment le câble 6 et le câble 22.

9. Procédé de suppression d'interférences causées par une première antenne (2) reliée à un premier émetteur (7) récepteur (11) sur une deuxième antenne (3) reliée à un deuxième émetteur (23) récepteur (27), dans lequel :
- on émet un premier signal (15) à partir de la première antenne,
- on reçoit un deuxième signal avec la deuxième antenne, le deuxième signal comprenant un signal utile (33) et un signal parasite, le signal parasite étant le premier signal,
caractérisé en ce que :
- on prélève à l'aide d'un coupleur (39) directif une partie d'un signal destiné à être émis par la première antenne,
- on transmet ce signal prélevé par l'intermédiaire d'une liaison filaire (34) en polytétrafluoroéthylène, ce signal prélevé étant par la suite injecté à une entrée du récepteur de la deuxième antenne,
et en ce que :
- on atténue, avec un atténuateur (38) dans la liaison filaire, ce signal de façon à obtenir un signal compensateur de même amplitude que le signal parasite,
- on règle une longueur de la liaison filaire, avec un déphaseur (37), de façon à obtenir un signal compensateur en opposition de phase avec le signal parasite,
- on injecte ce signal compensateur dans le récepteur afin de le combiner au deuxième signal.
